# EUROPÄISCHE PATENTSCHRIFT

(11) **EP 1 078 895 B1**
(45) Veröffentlichungstag und Bekanntmachung des Hinweises auf die Patenterteilung: **20.07.2005**
(21) Anmeldenummer: 00115829.4
(22) Anmeldetag: 22.07.2000
(51) Int. Cl.: C03C 8/14, C03C 8/20, C03C 8/02

(54) **Verfahren zur Herstellung schwarzer recyclingfähiger Glasemails, Glasfarbe hierfür und damit emaillierte Glassubstrate**
Method of preparing black enamels for glass which can be recycled, glass colourant therefor and glass substrates enamelled therewith
Procédé de preparation d'une émail noir recyclable, colorant de verre pour ceci et substrat en verre émaillé avec ceci

(30) Priorität: 21.08.1999 DE 19939737
(43) Veröffentlichungstag der Anmeldung: 28.02.2001
(73) Patentinhaber: Ferro GmbH, 60327 Frankfurt (DE)
(72) Erfinder: Tünker, Gerhard, 63075 Offenbach (DE); Paulus, Hildegard, 60322 Frankfurt (DE)
(74) Vertreter: Reinhardt, Markus, Dipl.-Ing.

(56) Entgegenhaltungen:
- EP-A- 0 370 683
- EP-A- 0 545 166
- EP-A- 0 680 940
- EP-A- 0 723 941
- WO-A-98/25864
- US-A- 3 216 847
- PAUL RAMDOHR UND HUGO STRUNZ: "Lehrbuch der Mineralogie" 1978 , ENKE VERLAG , STUTTGART XP002213704 * Seite 510 *

## Beschreibung

Die Erfindung betrifft eine Glasfarbe zur Herstellung schwarzer recyclingfähiger Glasemails, enthaltend eine Glasfritte und ein manganhaltiges Pigment. Weitere Gegenstände richten sich auf eine diese Glasfarbe enthaltende Druckpaste sowie auf ein Abziehbild, dessen Dekorschicht die Glasfarbe enthält. Schließlich betrifft die Erfindung auch ein Verfahren zur Herstellung eines schwarzen recyclingfähigen Glasemails durch direktes oder indirektes Bedrucken eines Glassubstrats mit einer die Glasfarbe enthaltenden Zusammensetzung sowie auf ein verfahrengemäß erhältliches Glassubstrat mit einem schwarzen recyclingfähigen Glasemail.

Glasscheiben für Kraftfahrzeuge, insbesondere Windschutzscheiben, weisen an ihren Rändern eine Bedruckung aus einer schwarzen keramischen Farbe auf, die einerseits ästhetischen Zwecken dient, nämlich zum Abdecken der Klebestellen, die aus dem Einbau der Glasscheiben in die Karosserie resultieren, andererseits dem UV-Schutz des Klebers. Glasfarben zur Herstellung schwarzer Glasemails zur Dekoration von Kraftfahrzeugverglasungen enthalten als Hauptkomponenten einen Glasfluss, üblicherweise in der Form von einer oder mehreren Glasfritten und ein oder mehrere schwarze Pigmente. Gegebenenfalls kann diese Glasfarbe zusätzlich Additive zur Einstellung der Eigenschaften des Glasemails, etwa zum Zwecke einer partiellen Kristallisation, und/oder zur Modifizierung der Farbe enthalten. Zur Applikation der Glasfarbe wird diese üblicherweise in einem organischen Medium suspensiert und mittels eines direkten oder indirekten Druckverfahrens auf der Glasscheibe appliziert und anschließend eingebrannt.

Glasfarben für den genannten Zweck können Glasfritten auf der Basis von Blei-Borosilikaten enthalten, in jüngerer Zeit gewinnen jedoch bleifreie Glasfritten auf der Basis von Alkali-Zink-Borosilikaten (siehe beispielsweise EP-A 0 728 710) und Alkali-Bismuth-Borosilikate (siehe beispielsweise EP-A 0 370 683) als Glasfluss in Glasemails an Bedeutung. Auch Glasfritten auf der Basis von Kalium-Titan-Borosilikaten, welche zusätzlich auch Schwefel und/oder Eisenoxid enthalten können, sind für den genannten Zweck geeignet (siehe EP-A 0 723 941 und EP-A 0 790 220). Zur Pigmentierung der Glasfarbe werden üblicherweise schwarze keramische Farbkörper eingesetzt, die überwiegend auf der Basis von Spinellen der Systeme Cu-Cr, Co-Mn-Cr und Mn-Ni-Fe-Cr oder Mischungen davon aufgebaut sind. Die Auswahl und Einsatzmenge des oder der Pigmente richtet sich danach, dass bei einer Schichtdicke des eingebrannten Emails von etwa 15 bis 20 µm die beste Opazität und Schwarzfärbung erreicht werden.

Im Rahmen der europäischen Gesetzgebung wird angestrebt, dass nach Ende der Lebensdauer eines Kraftfahrzeugs möglichst viele Teile einer Wiederverwendung zugeführt-werden können. Demgemäß soll auch die mit einem Glasemail versehene Verglasung von Kraftfahrzeugen ausgebaut und wieder eingeschmolzen werden können. Während die aus Float-Glas hergestellten Gasscheiben im allgemeinen ohne Probleme wieder eingeschmolzen werden können, sind die aufgedruckten Glasemails meist als Fremdstoffe für die Glasschmelze anzusehen. Da die Glasemails mit dem Glas einen festen Schmelzverbund bilden, ist ein Entfernen der Farben schwierig und aufwendig. Besonders störend sind bei der Schmelze von normalem Float-Glas stark färbende Ionen, wie solche von Chrom, Mangan, Eisen, Kobalt und Nickel. Daher muß ihr Eintrag über die Recyclingscherben begrenzt werden. Bei eingefärbten Float-Gläsern, beispielsweise Wärmeschutzgläsern aus Grün- oder Grauglas, sind gewisse Mengen an Eisen- und/oder Mangenoxiden (etwa 0,5 bis 1 Gew.-%) tolerabel, da diese Oxide dem Gemenge ohnehin zugesetzt werden. Gemäß Glass Production Technology International (1997), Seiten 21-25 ist die Fachwelt bestrebt, in Glasschmelzen nur solche Stoffe einzusetzen, welche im wesentlichen frei sind von Blei, Kadmium, Zink, Chrom, Kobalt, Nickel und Kupfer. Außer den vorgenannten schwarzen Spinellpigmenten wird damit auch die Einsatzmöglichkeit von Alkali-Zink-Borosilikaten eingeschränkt.

Die DE-A 44 01 657 lehrt schwarze bis schwärzliche Glasemails, welche als Pigment im wesentlichen Magnetit, Fe₃O₄, enthalten und somit ein späteres Recycling zur Herstellung von grünem Flachglas ermöglichen. Nachteilig an Magnetit ist, dass dieses unter üblichen Brennbedingungen oberhalb 600 °C nicht ausreichend stabilisiert werden kann, so dass eine Zersetzung zu rotem Fe₂O₃ und gelbem FeO erfolgt und damit eine ungenügende Schwarzfärbung erzielt wird.

Aus der DE-A 195 25 658 ist eine einbrennbare Druckpaste auf der Basis einer niedrig-schmelzenden Glaskomponente, anorganischen Farbpigmenten und einer organischen und/oder anorganischen Bindemittelkomponente bekannt, deren recyclingfähige schwarze Pigmente aus der Reihe Magnetit, Titannitrid und Kohlenstoff mit einer Glaszusammensetzung umhüllt sind. Das zur Umhüllung verwendete Sol-Gel-Verfahren ist aufwendig und verteuert die Pigmente. Zudem wird die Pigment-Volumen-Konzentration vermindert, was sich negativ auf die Opazitat der Farbe auswirkt.

In der WO 98/25864 wird eine Emailzusammensetzung für Glas beschrieben, welche eine Glasfritte und mindestens eine Manganverbindung enthält und unterhalb 750 °C schmilzt. Die Zusammensetzung enthält 10 bis 50 Gew.-% einer oder mehrerer Manganverbindungen. Das Manganpigment kann einem gefritteten Glasfluss zugemischt werden. Alternativ hierzu kann bei ausreichend hoher Anwesenheit einer Manganverbindung in einer Glasschmelze das Mn-Pigment bei einem nachfolgenden Temperprozess gebildet werden. Die in diesem Dokument angegebenen L*-Werte liegen um einige Punkte unter den Werten, die bei der Nacharbeitung gefunden wurden.

Es ist grundsatzlich bekannt, Gläser mit Manganverbindungen einzufärben (siehe Weyl, Coloured Glasses (1951), Seite 121 ff). Nachteilig an Gemischen aus glasbildenden Rohstoffen und einer Manganverbindung, wie Braunstein oder Mangancarbonat, welche auch im Verfahren der WO 98/25864 zum Einsatz kommen, ist, dass diese stark zum Schäumen in der Glasschmelze neigen. Ein weiterer Nachteil besteht darin, dass die Schmelzöfen, die in der Regel auch zur Herstellung verschiedener farbloser Fritten verwendet werden, durch die Farbschmelzen stark verunreinigt werden. Nachteilig an einer Glasfarbe auf der Basis einer Glasfritte und einer während des keramischen Brands pigmentbildenden Manganverbindung ist, dass es beim Einbrennen zur Ausbildung einer blasigen Emailschicht kommt, welche keine ausreichende Kratzfestigkeit aufweist.

Bekannt ist auch (siehe EP-A 0 321 297), dass Emails und Glasuren, welche Pigmente auf der Basis von Manganoxiden, wie Braunstein, enthalten, einen unerwünschten bräunlichen Farbton aufweisen.

Aufgabe der Erfindung ist es demgemäß, eine weitere Glasfarbe zur Herstellung schwarzer recyclingfähiger Glasemails aufzuzeigen, deren Pigment zwar manganhaltig ist, jedoch kein Chrom, Kobalt, Nickel und/oder Kupfer enthält. Die Glasfarbe sollte in einfacher Weise zugänglich sein und den Einsatz einer Manganverbindung in der Glasschmelze vermeiden. Die Glasfarbe sollte sich ferner porenfrei auf Glas einbrennen lassen.

Es wurde gefunden, dass sich mit an sich braunen Farbkörpern des Systems Fe₂O₃-Mn₂O₃, nachfolgend als (Fe,Mn)₂O₃ bezeichnet, schwarze Glasemails erzeugen lassen, wenn der genannte Farbkörper in der kristallografischen Bixbyite-Struktur vorliegt und in Gegenwart ganz bestimmter Glasfritten eingebrannt wird.

Gegenstand der Erfindung ist somit eine Glasfarbe zur Herstellung schwarzer recyclingfähiger Glasemails, enthaltend einen Glasfluss, umfassend eine oder mehrere Glasfritten, und ein manganhaltiges Pigment, welche dadurch gekennzeichnet ist, dass sie als Pigment einen braunen Farbkörper des Systems (Fe,Mn)₂O₃ in der Bixbyite-Struktur enthält und die Glasfritte(n), im wesentlichen ausgewählt ist (sind) aus der Reihe von im wesentlichen Pb- und Zn-freien Glasfritten auf der Basis von Alkali-Bi-Borosilikaten und/oder Kalium-Ti-Borosilikaten.

Obgleich bereits eine sehr geringe Menge Eisen in Mn₂O₃ die Ausbildung der Bixbyite-Struktur ermöglicht, enthalten bevorzugte Glasfarben Eisen und Mangan in einem Atomverhältnis im Bereich von 5 zu 1 bis 1 zu 5, vorzugsweise im Bereich von 1,5 zu 1 bis 0,5 zu 1. Das bevorzugte Atomverhältnis Fe zu Mn führt zu einer verbesserten Schwarzfärbung, entsprechend einem geringeren L*-Wert im CIELAB-System (DIN 5033, Teil 3).

Eine erfindungsgemäße Glasfarbe enthält vorzugsweise 10 bis 30 Gew.-% eines (Fe,Mn)₂O₃-Pigments in der Bixbyite-Struktur und 50 bis 90 Gew.-% einer oder mehrerer Glasfritten der zuvor genannten Gattungen. Bei der Glasfarbe handelt es sich um ein homogenes Pulvergemisch, das außer einem oder mehreren Pigmenten und einem oder mehreren Glasfritten zusätzlich 0 bis 30 Gew.-% Additive enthalten kann, womit die Eigenschaften der Glasfarbe und/oder des Glasemails modifiziert werden können. Bei solchen Additiven handelt es sich beispielsweise um Mahlhilfsmittel, anorganische pulverförmige Bindemittel, Füllstoffe, Kristallkeime zur Beschleunigung einer partiellen Kristallisation des Glasemails und Antihaftmittel.

Glasfritten, in deren Gegenwart an sich braune Pigmente auf der Basis von (Fe,Mn)₂O₃ in der Bixbyite-Struktur beim Einbrennen auf Glas eine tiefschwarze Farbe ergeben, basieren auf Alkali-Bismuth-Borosilikaten und/oder Kalium-Titan-Borosilikaten. Die Glasfritten der genannten Gattungen können als Nebenbestandteile zusätzlich einige andere Oxide enthalten, wobei die Nebenbestandteile zusammen zweckmäßigerweise einen Anteil von weniger als 30 Gew.-%, bezogen auf die Glasfritte, vorzugsweise weniger als 15 Gew.-% ausmachen. Bei den als Nebenbestandteil anwesenden Oxiden, welche die prinzipielle Eignung der Glasfritte nicht oder nicht nennenswert beeinflussen, handelt es sich insbesondere um Oxide aus der Reihe BaO, Al₂O₃, ZrO₂, La₂O₃, Lanthanidoxide und Eisenoxide. Die als Nebenbestandteil anwesenden Oxide können in einer Menge von jeweils bis zu 5 Gew.-% anwesend sein.

Die K-Ti-Borosilikatfritte kann zusätzlich bis zu 5 Gew.-% Bi₂O₃ und die Alkali-Bi-Borosilikatfritte bis zu 5 Gew.-% TiO₂ enthalten. Zusätzlich können die Basisfritten, insbesondere jene auf der Basis K-Ti-Borosilikat bis zu 5 Gew.-% Schwefel enthalten. Bei den besonders bevorzugten Glasfritten auf der Basis von K-Ti-Borosilikaten handelt es sich um solche, welche in der EP-A 0 723 941 und EP-A 0 790 220 beschrieben sind und hiermit in die Offenbarung eingeschlossen werden.

Bei den Fritten auf der Basis von Alkali-Bi-Borosilikaten handelt es sich um ZnO-arme, vorzugsweise ZnO-freie Glasfritten mit hohem Bi₂O₃-Gehalt, beispielsweise solche gemäß US-Patent 5,714,420 und vorzugsweise EP-A 0 895 969, wobei letztere einen Bi₂O₃-Gehalt von 45 bis 67 Gew.-% aufweisen.

Gemäß einer anderen bevorzugten Ausführungsform der erfindungsgemäßen Glasfarbe enthält diese außer gattungsgemäßen Glasfritten und gattungsgemäßen Pigmenten in der Bixbyite-Struktur zusätzlich ein teilchenförmiges Wismutsilikat oder Zinksilikat in einer Menge bis zu 30 Gew.-%, bezogen auf die Glasfarbe. Bei dem Wismut- oder Zinksilikat handelt es sich um Keimmaterial, damit das Glasemail beim Einbrennen teilweise kristallisiert und somit ein Anhaften des Glasemails an den Werkzeugen bei der Formgebung vermieden wird. Anstelle der genannten Bismut- und Zinksilikat-Keimmaterialien kann die Glasfarbe auch andere dem Fachmann bekannte Mittel zur Vermeidung eines Anhaftens enthalten - derartige Mittel sind in dem zuvor genannten US-Patent 5,714,420 und in der EP-A 0 895 969, welche hiermit in die Offenbarung der vorliegenden Anmeldung einbezogen werden, offenbart. Bei solchen Stoffen handelt es sich insbesondere um Impfmaterial aus der Reihe von Bismutsilikaten, wie Bi₁₂SiO₂₀, Bi₄(SiO₄)₃ und Bi₂SiO₅; dem gleichen Zweck dient auch ein Zusatz von Zinksilikaten und Elementen aus der Reihe Eisen, Silber, Bor und Kohlenstoff.

Obgleich die erfindungsgemäße Glasfarbe mittels trockener Applikationsverfahren, beispielsweise elektrostatischem Besprühen, auf Glas aufgebracht werden kann, ist es im allgemeinen üblich, die Glasfarbe in Form einer Druckpaste zu verwenden. In solchen Druckpasten ist die Glasfarbe in einem üblicherweise organischen Medium homogen suspendiert, und das Medium verbrennt während des Einbrennes vollständig und blasenfrei. Typische Medien sind organisch und umfassen unter anderem Zusammensetzungen auf der Grundlage von Pinenölen, pflanzlichen Ölen, mineralischen Ölen, Mineralölfraktionen von niedrigem Molekulargewicht, Tridecylalkohol, synthetische und natürliche Harze, wie insbesondere Alkydharze und Acrylharze. Zusätzlich können die Pasten oberflächenaktive Mittel und/oder andere filmbildende Modifizierungsmittel in wirksamer Menge zugegeben werden. Geeignete Medien sind auch UV-härtende Medien. Solche Medien sind dem Fachmann bekannt, sie bestehen im allgemeinen aus polymerisierbaren Monomeren und/oder Oligomeren mit einem Gehalt an Acrylat- oder/und Methacrylat-Funktionsgruppen sowie Fotoinitiatoren und Polymerisationshemmern. Repräsentative Systeme dieser Art sind in den US-Patenten 4,306,012 und 4,649,062 offenbart. Druckpasten, welche UV-härtende Systeme enthalten, werden bekanntlich mit UV-Strahlung gehärtet.

Die im speziellen Fall einzusetzenden Medien und deren Menge werden unter Berücksichtigung der spezifischen Komponenten der Zusammensetzung und der gewünschten Viskosität ausgewählt. Im allgemeinen enthält die Druckpaste 50 bis 90 Gew.-% Glasfarbe und 10 bis 50 Gew.-% Medium. Besonders bevorzugt wird ein Gehalt an Medium im Bereich von 15 bis 40 Gew.-%. Die Druckpasten sind meistens zähflüssig, wobei die Viskosität von der Auftragsmethode und der vorgesehenen Anwendung des Produkts abhängt. Für Zwecke des Siebdrucks sind Viskositäten im Bereich von 10 bis 80 Pa·s, vorzugsweise 35 bis 65 Pa·s, gemessen bei 20 °C mit einem Brookfield-Viskosimeter mit einer Spindel Nr. 7 bei 20 Upm besonders geeignet.

Die erfindungsgemäßen Glasfarben können als Additive auch Füllstoffe, wie Kieselsäure, Aluminiumoxid, Wollastonit, Calciumsilikat-Verbindungen, Bor-Aluminiumsilikate, Natrium-Kalzium-Aluminiumsilikat-Verbindungen, Feldspäte und Titandioxid enthalten.

Unter Verwendung der vorgenannten Druckpaste lassen sich auch in üblicher Weise Abziehbilder erzeugen, die ihrerseits zur Herstellung eines recyclingfähigen schwarzen Glasemails auf einem Glassubstrat herangezogen werden können. Solche Abziehbilder enthalten auf einem flächigen Trägermaterial, insbesondere auf einem Karton, eine wasseraktivierbare oder thermisch aktivierbare Trennschicht und darauf eine Dekorschicht, welche eine erfindungsgemäße Glasfarbe enthält und vorzugsweise unter Verwendung einer erfindungsgemäßen Druckpaste, beispielsweise mittels Siebdruck, aufgebracht wurde. Die Dekorschicht ist mit einer üblichen Filmschicht abgedeckt. Die Herstellung und Anwendung derartiger Abziehbilder ist allgemein bekannt, und die erfindungsgemäßen Abziehbilder unterscheiden sich von jenen des Standes der Technik durch die Auswahl der in der Dekorschicht enthaltenen Glasfarbe.

Gefunden wurde auch ein Verfahren zur Herstellung eines schwarzen recyclingfähigen Glasemails: Hierbei wird auf ein Glassubstrat mittels Direkt- oder Indirektdruck eine die erfindungsgemäße Glasfarbe enthaltende Zusammensetzung in dekorbildender Schicht auf mindestens einen Teil des Glassubstrats aufgebracht. Die Druckpaste kann durch konventionelle Methoden, z. B. mittels Siebdruck, Abzugsverfahren, Sprühen, Streichen, Rollbeschichtung oder dergleichen auf das Substrat aufgetragen werden. Siebdruck wird bevorzugt, wenn die Zusammensetzung auf ein Glassubstrat, insbesondere eine Glasscheibe, gebracht wird. Zum Aufbringen eines Glasemails auf gewölbte Flächen eignet sich insbesondere die Abziehbildtechnik. Sofern es sich bei der Zusammensetzung um ein ein anorganisches Medium enthaltende Druckpaste handelt, schließt sich an den Auftrag mittels üblicher Drucktechniken, wie Siebdrucktechnik und Tamponumdrucktechnik, ein Trocknungs- und/oder Härtungsschritt an, wobei der größte Teil der Lösungsmittel verdampft und/oder anwesende Bindemittel härten. Die auf das Glassubstrat aufgebrachte Emailschicht wird bei 500 bis 750 °C, vorzugsweise im Bereich von 520 bis 650 °C und insbesondere bei 530 bis 620 °C eingebrannt. Kennzeichen des Verfahrens ist, daß die dekorbildende Schicht als dekorbildenden Bestandteil eine erfindungsgemäße Glasfarbe enthält. Im Falle von Glasscheiben wird der Einbrennvorgang häufig mit einer Formgebung verbunden.

Anstelle mittels eines Direktdruckverfahrens lassen sich auch mittels eines Abziehbilds Glasemails auf Glassubstrate, insbesondere Glasscheiben, aufbringen. Die im erfindungsgemäßen Abziehbild enthaltene Glasfarbe bewirkt beim Einbrennen die Ausbildung eines schwarzen recyclingfähigen Glasemails.

Die vorliegende Erfindung betrifft auch ein mit einem schwarzen recyclingfähigen Glasemail versehenes Glassubstrat, insbesondere eine zumindest teilweise emaillierte Automobilglasscheibe, wobei das Glasemail aus einer erfindungsgemäßen Glasfarbe gebildet wurde. Anstelle auf Glassubstrate, wie Glasscheiben und Architekturglas sowie Geräte und Getränkebehälter aus Glas, lassen sich erfindungsgemaß schwarze Glasemails auch auf Keramiksubstrate und andere einbrennfähige Substrate aus einem porenfreien Material aufbringen.

Die Vorteile der erfindungsgemäßen Glasfarbe bestehen darin, dass sich diese in einfacher Weise erzeugen lässt, im wesentlichen durch homogenes Mischen der gattungsgemäßen Glasfritte mit dem gattungsgemäßen Mangan-Pigment mit der Bixbyite-Struktur und soweit anwesend, den Additiven. Diese Glasfarbe lässt sich in bekannter Weise anwenden, und beim Einbrennen bilden sich keine Blasen in der Glasemailschicht. Überraschenderweise werden trotz des Einsatzes eines braunen Pigments tiefschwarze Dekore erhalten.

Die Erfindung wird anhand der nachfolgenden Beispiele weiter erläutert.

### Beispiele

Eine Glasfritte auf der Basis eines Kalium-Titan-Borosilikats gemäß EP-A 0 790 220 wird mit jeweils 20 Gew.-% verschiedener Farbpigmente gemischt und unter vergleichbaren Bedingungen zu einer druckfähigen Siebdruckpaste verarbeitet. Die Glasfritte bestand aus (Angaben in Gew.-%):SiO₂ 39,0, TiO₂ 18,8 , K₂O 19,5 , Fe₂O₃ 4,5 , B₂O₃ 17,3 , Al₂O₃ 0,2 , SO₃ 0,8. Die jeweilige Glasfarbe wurde in einem üblichen Siebdruckmedium (Nr. 80893 der Cerdec AG) mittels Mischer und Dreiwalzwerk angepastet. Die Pasten wurden unter einheitlichen Bedingungen mit einer Nassschichtdicke von 24 µm auf 4 mm Glasplatten gedruckt und in einem Schockbrandofen bei 660 °C in 4 min. eingebrannt. An den eingebrannten Farbschichten wurde durch das Glas mit einem CIELAB-Farbmessgerät in Messart D65/10° der L*-Wert als Maß für die Schwärze bestimmt. Tabelle 1 enthält die eingesetzten Pigmente sowie die L*-Werte.

**Tabelle 1**

| Nr. | Pigment | L* |
|---|---|---|
| VB 1 | Cu,Cr-Spinell | 10,0 |
| | | |
| VB 2 | Ni,Mn,Fe,Cr-Spinell | 7,5 |
| | | |
| VB 3 | Co,Mn,Fe,Cr-Spinell | 8,3 |
| B 1 | Bixbyite Fe/Mn = 1:1 | 8,7 |
| | | |
| B 2 | Bixbyite Fe/Mn = 0,04:1 | 12,0 |

Der Vergleich der Beispiele B 1 und B 2 mit den Vergleichsbeispielen VB 1 bis VB 3 zeigt, dass unter Einsatz des ausgewählten Frittesystems mit den Bixbyite-Pigmenten im wesentlichen L-Werte in der gleichen Größenordnung erhalten werden wie unter Einsatz von Standardpigmenten auf der Basis von nicht-recyclingfähigen Spinellen. Weiterhin ist erkennbar, dass ein (Fe,Mn)₂O₃-Pigment mit Bixbyite-Struktur und einem Fe/Mn-Verhältnis von 1 zu 1 eine deutlich tiefere Schwarzfärbung liefert als ein Pigment mit nur geringem Anteil an Eisen.

### Beispiele 3 und 4 und Vergleichsbeispiel 4

Es wurden Glasfarben aus 75 Gew.-% verschiedener Glasfritten und 25 Gew.-% eines (Fe,Mn)₂O₃-Bixbyite-Pigments (FK 260742 der Cerdec AG) zu einer Glasfarbe homogenisiert und anschließend angepastet und wie zuvor getestet. Als Glasfritten wurden eingesetzt: In Vergleichsbeispiel 4 die Glasfritte gemäß Beispiel 1 der EP-A 0 370 683, in Beispiel 3 eine bismuthaltige Glasfritte gemäß Beispiel 1 der WO 98/25864, jedoch ohne Manganoxid und in Beispiel 4 das K-Ti-Borosilikat gemäß den Beispielen 1 und 2.

**Tabelle 2**

| Nr. | Glasfritte | L* |
|---|---|---|
| VB 4 | Alkali-Zn-borosilikat | 9,2 |
| B 3 | Alkali-Bi-borosilikat | 5,2 |
| B 4 | Kalium-Ti-borosilikat | 8,3 |

Die Versuche zeigen, dass unter Einsatz erfindungsgemäßer Glasfritten niedrigere L-Werte erzielt werden als unter Einsatz der nicht-erfindungsgemäßen zinkhaltigen Glasfritte. Das Glasemail gemäß VB 4 war zudem nicht rein schwarz, sondern wies einen Braunton auf.

### Beispiel 5

### Abschätzung der Recyclingfähigkeit

Eine Autoheckscheibe mit einem Scheibengewicht von 7000 g enthielt ein Glasemail gemäß Beispiel 1 entsprechend einer Menge von 4 g (Fe,Mn)₂O₃. Der Pigmentanteil von 0,06 Gew.-% liegt unterhalb der tolerablen Menge für eine Floatglasschmelze.

## Patentansprüche

1. Glasfarbe zur Herstellung schwarzer recyclingfähiger Glasemails, enthaltend einen Glasfluss, umfassend eine oder mehrere Glasfritten, und ein manganhaltiges Pigment,
**dadurch gekennzeichnet,**
**dass** sie als Pigment einen braunen Farbkörper des Systems (Fe,Mn)₂O₃ in der Bixbyite-Struktur mit einem Fe- zu Mn-Atomverhaltnis von 5 zu 1 bis 1 zu 5 enthält und die Glasfritte(n), im wesentlichen ausgewählt ist (sind) aus der Reihe von im wesentlichen Pb- und Zn-freien Glasfntten auf der Basis von Alkali-Bi-Borosilikaten und/oder Kalium-Ti-Borosilikaten.

2. Glasfarbe nach Anspruch 1,
**dadurch gekennzeichnet,**
**dass** das (Fe,Mn)₂O₃-Pigment in der Bixbyite-Struktur ein Fe- zu Mn-Atomverhältnis von 1,5 zu 1 bis 0,5 zu 1 aufweist.

3. Glasfarbe nach Anspruch 1 oder 2,
**dadurch gekennzeichnet,**
**dass** sie 10 bis 30 Gew.-% eines (Fe,Mn)₂O₃-Pigments in der Bixbyite-Struktur enthält.

4. Glasfarbe nach einem der Ansprüche 1 bis 3,
**dadurch gekennzeichnet,**
**dass** sie zusätzlich ein oder mehrere anorganische Additive aus der Reihe der Füllstoffe, Keime zur teilweisen Kristallisation des Glasemails, Antihaftmittel und anorganische Bindemittel enthält.

5. Glasfarbe nach einem oder mehreren der Ansprüche 1 bis 4,
**dadurch gekennzeichnet,**
**dass** sie im wesentlichen aus 10 bis 30 Gew.-% eines oder mehrerer (Fe,Mn)₂O₃-Pigmente in der Bixbyite-Struktur und 50 bis 90 Gew.-% einer oder mehrerer Glasfritten auf der Basis von Alkali-Bi-Borosilikaten und/oder Kalium-Ti-Borosilikaten und 0 bis 30 Gew.-% eines oder mehrerer Additive besteht.

6. Glasfarbe nach einem oder mehreren der Ansprüche 1 bis 5,
**dadurch gekennzeichnet,**
**dass** die Glasfritte(n) zusätzlich ein oder mehrere Oxide aus der Reihe BaO, Al₂O₃, ZrO₂, La₂O₃ und Lanthanidoxide, und Eisenoxide und/oder Schwefel in einer Menge von jeweils 0 bis 5 Gew.-% enthalten.

7. Glasfarbe nach einem oder mehreren der Ansprüche 1 bis 6,
**dadurch gekennzeichnet,**
**dass** die Glasfritte auf Basis K-Ti-Borosilikat im wesentlichen aus (in Mol-%) K₂O 10-17, B₂O₃ 10-25, TiO₂ 15-30, SiO₂ 30-55, Al₂O₃ 0-5, Bi₂O₃ 0-5, Fe₂O₃ 0-3, insbesondere 0,05-3, und S 0-3, insbesondere 0,1-3, besteht.

8. Druckpaste zur Herstellung schwarzer Glasemails, enthaltend eine in einem flüssigen oder thermoplastischen, organischen Medium suspendierte Glasfarbe,
**dadurch gekennzeichnet,**
**dass** sie 15 bis 40 Gew.-% einer Glasfarbe gemäß einem der Ansprüche 1 bis 7 enthält.

9. Abziehbild zur Herstellung eines schwarzen Glasemails, umfassend einen mit einer wasseraktivierbaren oder thermisch aktivierbaren Trennschicht versehenen Träger, eine Dekorschicht auf der Trennschicht und eine Filmschicht auf der Dekorschicht,
**dadurch gekennzeichnet,**
**dass** die Dekorschicht eine Glasfarbe gemäß einem der Ansprüche 1 bis 7 enthält.

10. Verfahren zur Herstellung eines schwarzen recyclingfähigen Glasemails, umfassend Aufbringen einer eine Glasfarbe enthaltenden Zusammensetzung in dekorbildender Schicht auf mindestens einen Teil eines Glassubstrats und Einbrennen bei einer Temperatur im Bereich von 500 bis 750 °C,
**dadurch gekennzeichnet,**
**dass** man mittels Direkt- oder Indirektdruck eine Zusammensetzung aufbringt, welche eine Glasfarbe gemäß einem der Ansprüche 1 bis 7 enthält.

11. Verfahren nach Anspruch 10,
**dadurch gekennzeichnet,**
**dass** man eine Zusammensetzung gemäß Anspruch 8 oder ein Abziehbild gemäß Anspruch 9 auf das Glassubstrat, insbesondere eine Glasscheibe, aufbringt.

12. Glassubstrat mit einem schwarzen recyclingfähigen Glasemail, insbesondere zumindest teilweise emaillierte Automobilglasscheibe, **gekennzeichnet durch** ein Glasemail aus einer Glasfarbe gemäß einem der Ansprüche 1 bis 7.

## Claims

1. Glass colourant for the production of recyclable black glass enamels, containing a flux comprising one or more glass frits, and a manganese-containing pigment, **characterized in that** the pigment is a brown colourant belonging to the system (Fe,Mn)₂O₃ having the bixbyite structure with an Fe/Mn atomic ratio of 5/1 to 1/5, and the glass frit(s) is (are) essentially selected from the group substantially comprising Pb-free and Zn-free glass frits based on alkali metal bismuth borosilicates and/or potassium titanium borosilicates.

2. Glass colourant according to Claim 1, **characterized in that** the Fe/Mn atomic ratio in the (Fe,Mn)₂O₃ pigment having the bixbyite structure is 1.5/1 to 0.5/1.

3. Glass colourant according to Claim 1 or 2, **characterized in that** it contains 10 to 30 wt.% of a (Fe,Mn)₂O₃ pigment having the bixbyite structure.

4. Glass colourant according to one of Claims 1 to 3, **characterized in that** it additionally contains one or more inorganic additives from the group comprising fillers, seeds for partial crystallization of the glass enamel, antiadhesives and inorganic binders.

5. Glass colourant according to one or more of Claims 1 to 4, **characterized in that** it substantially consists of 10 to 30 wt.% of one or more (Fe,Mn)₂O₃ pigments having the bixbyite structure, 50 to 90 wt.% of one or more glass frits based on alkali metal bismuth borosilicates and/or potassium titanium borosilicates and 0 to 30 wt.% of one or more additives.

6. Glass colourant according to one or more of Claims 1 to 5, **characterized in that** the glass frit(s) additionally contains (contain) one or more oxides from the group comprising BaO, Al₂O₃, ZrO₂, La₂O₃ and lanthanide oxides, and iron oxides and/or sulfur in an amount of 0 to 5 wt.% in each case.

7. Glass colourant according to one or more of Claims 1 to 6, **characterized in that** the glass frit based on potassium titanium borosilicate substantially consists (in mol%) of K₂O 10-17, B₂O₃ 10-25, TiO₂ 15-30, SiO₂ 30-55, Al₂O₃ 0-5, Bi₂O₃ 0-5, Fe₂O₃ 0-3, especially 0.05-3, and S 0-3, especially 0.1-3.

8. Printing paste for the production of black glass enamels, containing a glass colourant suspended in a liquid or thermoplastic organic medium, **characterized in that** it contains 15 to 40 wt.% of a glass colourant according to one of Claims 1 to 7.

9. Transfer for the production of a black glass enamel, comprising a support provided with a release layer activatable by water or heat, a decorative layer on the release layer, and a film layer on the decorative layer, **characterized in that** the decorative layer contains a glass colourant according to one of Claims 1 to 7.

10. Process for the production of a recyclable black glass enamel, comprising the application of a glass colourant-containing composition, in a decorative layer, to at least part of a glass substrate, and stoving at a temperature ranging from 500 to 750°C, **characterized in that** direct or indirect pressure is used to apply a composition containing a glass colourant according to one of Claims 1 to 7.

11. Process according to Claim 10, **characterized in that** a composition according to Claim 8 or a transfer according to Claim 9 is applied to the glass substrate, especially a glass pane.

12. Glass substrate with a recyclable black glass enamel, especially at least partially enamelled automotive glass pane, **characterized by** a glass enamel made of a glass colourant according to one of Claims 1 to 7.

## Revendications

1. Colorant de verre pour la fabrication d'émail de verre recyclable noir, contenant un flux de verre, comprenant une ou plusieurs frittes de verre, et un pigment à teneur en manganèse,
**caractérisé par le fait**
**qu'**il contient, comme pigment, un corps colorant brun du système (Fe, Mn)₂O₃ dans la structure de bixbyite avec un rapport atomique Fe à Mn de 5 à 1 à 1 à 5 et la (ou les) fritte(s) de verre est (ou sont) essentiellement choisie(s) dans la série des frittes de verre sensiblement exemptes de Pb et de Zn, à base de borosilicates d'alcali-Bi et/ou de borosilicates de potassium-Ti.

2. Colorant de verre selon la revendication 1,
**caractérisé par le fait**
**que** le pigment de (Fe, Mn)₂O₃ dans la structure de bixbyite présente un rapport atomique Fe à Mn de 1,5 à 1 à 0,5 à 1.

3. Colorant de verre selon l'une des revendications 1 ou 2,
**caractérisé par le fait**
**qu'**il contient 10 à 30 % en poids d'un pigment de (Fe, Mn)₂O₃ dans la structure de bixbyite.

4. Colorant de verre selon l'une des revendications 1 à 3,
**caractérisé par le fait**
**qu'**il contient en outre un ou plusieurs additifs inorganiques de la série des charges, germes de cristallisation partielle de l'émail de verre, agents anti-adhésifs et liants inorganiques.

5. Colorant de verre selon l'une ou plusieurs des revendications 1 à 4,
**caractérisé par le fait**
**qu'**il se compose essentiellement de 10 à 30 % en poids d'un ou plusieurs pigments de (Fe, Mn)₂O₃ dans la structure de bixbyite et 50 à 90 % en poids d'une ou plusieurs frittes de verre à base de borosilicates d'alcali-Bi et/ou de borosilicates de potassium-Ti et 0 à 30 % en poids d'un ou plusieurs additifs.

6. Colorant de verre selon l'une ou plusieurs des revendications 1 à 5,
**caractérisé par le fait que**
que la (ou les) fritte(s) de verre contient (contiennent) en outre un ou plusieurs oxydes de la série BaO, Al₂O₃, ZrO₂, La₂O₃ et oxydes de lanthanides, et oxydes de fer et/ou soufre dans une quantité de respectivement 0 à 5 % en poids.

7. Colorant de verre selon l'une ou plusieurs des revendications 1 à 6,
**caractérisé par le fait**
**que** la fritte en verre à base de borosilicate de K-Ti se compose essentiellement (en % en moles) de K₂O 10-17, B₂O₃ 10-25, TiO₂ 15-30, SiO₂ 30-55, Al₂O₃ 0-5, Bi₂O₃ 0-5, Fe₂O₃ 0-3, en particulier 0,05-3, et S 0-3, en particulier 0,1-3.

8. Pâte d'impression pour la fabrication d'émail de verre noir, comprenant un colorant de verre en suspension dans un milieu organique liquide ou thermoplastique
**caractérisée par le fait**
**qu'**elle contient 15 à 40 % en poids d'un colorant de verre tel que défini à l'une des revendications 1 à 7.

9. Décalque pour la fabrication d'un émail de verre noir, comprenant un support muni d'une couche de séparation activable par l'eau ou activable thermiquement, une couche de décoration sur la couche de séparation et une couche de film sur la couche de décoration,
**caractérisé par le fait**
**que** la couche de décoration contient un colorant de verre tel que défini à l'une des revendications 1 à 7.

10. Procédé de fabrication d'un émail de verre recyclable noir, comprenant l'application d'une composition contenant un colorant de verre en couche formant un décor sur au moins une partie d'un substrat de verre et la cuisson à une température dans la plage de 500 à 750°C,
**caractérisé par le fait**
**que** l'on applique par pression directe ou indirecte une composition qui contient un colorant de verre tel que défini à l'une des revendications 1 à 7.

11. Procédé selon la revendication 10,
**caractérisé par le fait**
**que** l'on applique une composition telle que définie à la revendication 8 ou un décalque tel que défini à la revendication 9 sur le substrat en verre, en particulier un vitrage.

12. Substrat de verre avec un émail de verre recyclable noir, en particulier vitrage automobile au moins en partie émaillé, **caractérisé par** un émail de verre à base d'un colorant de verre tel que défini à l'une des revendications 1 à 7.
